# EUROPEAN PATENT SPECIFICATION

(11) **EP 3 539 258 B1**
(45) Date of publication and mention of the grant of the patent: **19.08.2020**
(21) Application number: 17798135.4
(22) Date of filing: 27.10.2017
(51) Int. Cl.: B61L 27/00, H04L 12/24, H04L 29/06, H04L 12/26

(54) **SAFETY-CRITICAL ROUTER**
SICHERHEITSKRITISCHER ROUTER
ROUTEUR CRITIQUE POUR LA SÉCURITÉ

(30) Priority: 08.11.2016 GB 201618830
(43) Date of publication of application: 18.09.2019
(73) Proprietor: Siemens Mobility Limited, Frimley, Camberley, Surrey GU16 8QD (GB)
(72) Inventor: LAKSHMANAPPA, Sunitha, Chippenham SN15 1UA (GB); SHETTY, Deepak, Chippenham SN15 3QJ (GB)
(74) Representative: Deffner, Rolf
(86) International application number: PCT/EP2017/077668
(87) International publication number: WO 2018/086917

(56) References cited:
- EP-A1- 1 407 356
- US-A1- 2008 186 977

## Description

### Technical field of the invention

The present disclosure relates to a safety-critical router particularly, but not necessarily exclusively applicable to installing, testing and operating trackside electrical equipment in a railway.

### Background of the invention

Modern railway networks involve the use of a large amount of electrical equipment, both on board railway vehicles and, of more relevance to the invention to be described, installed at and near the track. Such equipment includes, for example, signalling equipment, fault detectors, zone controllers and electrical supply equipment and is referred to below collectively as "railway network equipment". The railway network equipment is connected to a communications network allowing remote control and monitoring. The electrical network constituted by all the various trackside equipment including their communications links is referred to below as the "trackside network". In the case of the UK railway network for example, this is based around the Fixed Telecom Network (FTN), largely built using optical fiber and currently based around Synchronous Digital Hierarchy (SDH), but is being upgraded to an all-Internet Protocol (IP) network called FTNx. The trackside network is essentially a very large computer network, so techniques known from computer networking, such as switching, routing and private or virtual networks can be applied to it.

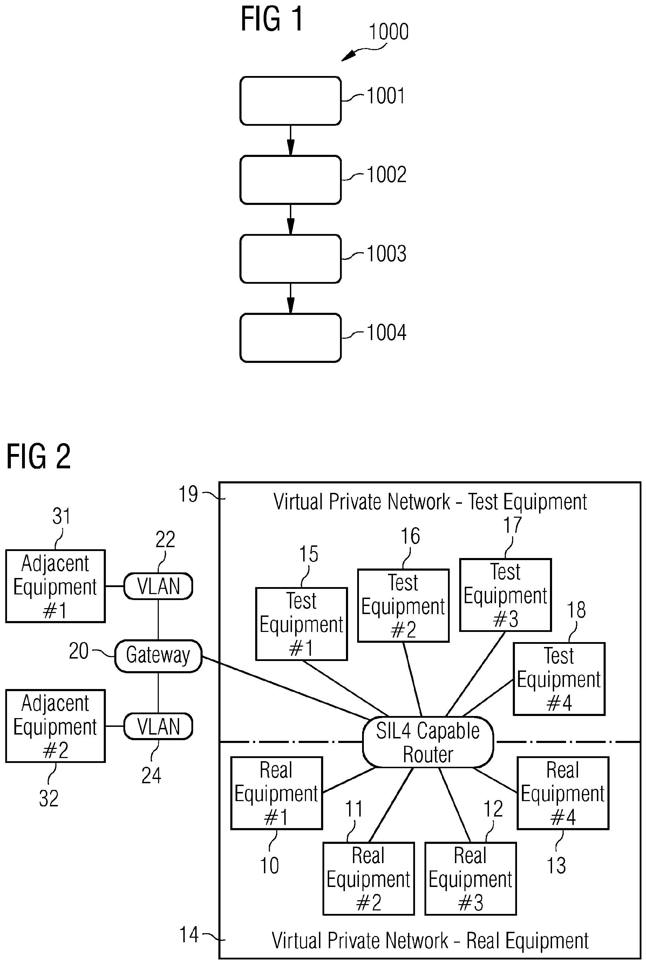

Existing methods of installing, testing and bringing into operation new or replacement equipment in the trackside network are laborious and cumbersome. Such installing, testing and making equipment operational is referred to henceforth as "commissioning". Figure 1 outlines steps in a conventional commissioning method 1000 when some new or upgraded equipment is to be installed at a given site. Step 1001 is to physically install the equipment and make a visual inspection on site of the power cables and other connections. Step 1002 is a standalone or no-load test on site, which leads in step 1003 to operational tests at the site. Finally in step 1004, an end-to-end test is performed at the site location when all installed equipment and sub-systems are tested. This stage shows that all the various equipment and sub-systems can functionally operate, thus fulfilling all the performance requirements. As will be apparent, such a method is inefficient and potentially hazardous to engineers as it requires tests to be carried out on a site by site basis, and in phases. EP 1407356A1 discusses the use of VPNs at different customer sites and central updating of the status of a VPN.

Stringent safety standards are applied to railway electrical equipment. The concept of a Safety Integrity Level (SIL) is employed to assess the relative level of safety required by each component, equipment or system in the trackside network. Each SIL defines a range of values for parameters such as probability of failure per hour (PFH), with an associated risk reduction factor (RRF). Four levels are defined as follows:

| **SIL** | **PFH** | **PFH (power)** | **RRF** |
|---|---|---|---|
| 1 | 0.00001-0.000001 | 10⁻⁵ - 10⁻⁶ | 100,000-1,000,000 |
| 2 | 0.000001-0.0000001 | 10⁻⁶ - 10⁻⁷ | 1,000,000-10,000,000 |
| 3 | 0.0000001-0.00000001 | 10⁻⁷ - 10⁻⁸ | 10,000,000-100,000,000 |
| 4 | 0.00000001-0.000000001 | 10⁻⁸ - 10⁻⁹ | 100,000,000-1,000,000,000 |

For railway applications, the most stringent level, SIL-4 is adopted wherever an equipment failure might result in a likelihood of death or injury. A certification scheme ensures that key equipment used in the trackside network can fulfil this safety level. Equipment which meets the above PFH requirement is referred to as "SIL-4 capable".

It would be desirable to provide a method of testing new network equipment in the live railway from a remote location, whilst maintaining the required safety separation of test and live equipment.

### Solution according to the invention

According to the present invention there is provided a router according to claim 1, a rail network according to claim 9, a method of commissioning test equipment according to claim 11 and a corresponding software according to claim 12. Embodiments are further defined by the dependent claims.

The invention can be implemented in digital electronic circuitry, or in computer hardware, firmware, software, or in combinations of them. The invention can be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

The above mentioned attributes, features, and advantages of this invention and the manner of achieving them, will become more apparent and understandable (clear) with the following description of embodiments of the invention in conjunction with the corresponding drawings, wherein:
Figure 1 outlines a conventional method of commissioning railway network equipment;
Figure 2 shows an interconnection architecture of railway network equipment applicable to the present invention;
Figure 3 shows hardware resources of a SIL4 Capable Router focussing on one lane thereof;
Figure 4 illustrates a user interface employed for mapping Ethernet interfaces to network equipment;
Figure 5 outlines a method of commissioning railway network equipment by use of the present invention; and
Figure 6 is a schematic view of a computing device capable as being employed as, for example, a maintenance computer for configuring the router.

### Description of the preferred embodiments

Figure 2 shows an example railway network equipment inter-connection architecture considered for the present invention, in which real equipment 10, 11, 12 and 13 (that is, live equipment which is already in operation at a site), test equipment 15, 16, 17 and 18 (that is, new equipment in the process of being tested/commissioned, for adding to or taking over from the real equipment) and adjacent equipment 31 and 32 (real equipment at another site) are connected together. In this architecture, these connections are made through a gateway 20 and SIL4 Capable Router 100. As can be seen from the Figure, the real equipment and test equipment are grouped into respective Virtual Private Networks (VPNs) 14 and 19, and the adjacent equipment connected via respective VLANs 22 and 24 to the gateway 20. It may be helpful to briefly define these terms.

A gateway, in the present context is one form of switch used to link network devices together and to forward data from one port to another based on information read from data packets being transmitted. Types of switch include "Layer 2" and "Layer 3" switches, these Layers being defined in the OSI (Open Systems Interconnection) seven-layer model. The term gateway is applied to a switch or router at the connecting point of two or more networks.

Layer 2 switches can read MAC addresses of packets but are not aware of the use or priority of those packets. By contrast, Layer 3 switches (also called routers) are able to use Network Layer (Layer 3) information to apply intelligence when forwarding packets. Based on the address of the destination network in the incoming packet and an internal routing table, the router determines on which of its ports to send out the packet, each port being typically connected to an Ethernet cable. Routers require packets formatted in a routable protocol, the most common being Internet Protocol (IP). In this way, a router can forward packets based on IP address or to prioritise packets sent by particular applications. Routers and Layer 3 switches also have the ability to logically segment a network into two or more Virtual local area networks (VLANs).

A VLAN is a switched network that is logically segmented on an organizational basis, for example by function, rather than on a physical or geographical basis. For example, all test equipment to be commissioned at a given site can be connected to the same VLAN, regardless of their physical connections to the network or the fact that they might be intermingled with other, real equipment. VLANs allow logical network topologies to overlay the physical switched infrastructure such that any arbitrary collection of LAN ports can be combined into a desired grouping. In this way, there is no need to physically unplug and replug cables to move equipment from one network to another: this can be achieved in software, by configuring a port into the appropriate VLAN.

A virtual private network (VPN) provides an encrypted connection over a less secure network. The benefit of using a secure VPN is it ensures the appropriate level of security to the connected systems when the underlying network infrastructure alone cannot provide it. The most common types of VPNs are remote-access VPNs and site-to-site VPNs.

The architecture of Figure 2 displays the following characteristics.

Firstly, the central real and test network equipment 10-13 and 15-18 are all connected to a single SIL4 Capable Router 100 (see below).

Second, all communications between the central real/test network equipment and adjacent systems 31, 32 are routed via a single gateway 20, for example a Layer-3 managed switch.

Third, the test equipment 15-18 (equipment to be tested/commissioned) is grouped into a VPN 19. Real equipment 10 - 13 (i.e. equipment which is already in use) is separated into a different VPN 14. In this example, there is one VPN 14 for the set of real equipment 10-13 and another VPN 19 for the set of test equipment 15-18. Other sets of test or real equipment could be present in further VPNs. Although sets of equipment are illustrated in Figure 2, at a minimum one VPN could contain one item of equipment.

As explained below, the SIL4 Capable Router employs multiple processor cores to handle routing of signals, and each of these VPNs is handled by a different core. In this way, isolation is provided between the real equipment and test equipment.

The core of the architecture is the SIL4 Capable Router and this will now be described in more detail. The SIL4 Capable Router is based around the concept of "lanes", which are distinct paths through the router. The SIL4 Capable Router provides three lanes, and is referred to as a hot-swap 2oo3 (2 out of 3) system because only two out of the three lanes are active at one time. Each lane consists of SIL-4 capable hardware which, combined with the hot-swappable ability of the lanes, makes the router as a whole able to meet the SIL-4 standard, in other words SIL-4 capable.

Each lane has its own responsibility. One lane acts as the Master lane and is responsible for the actual operation of the SIL4 Capable Router. The other two lanes act as Standby lanes. Either standby lane can take over as the Master lane at any time ("hot-swappable"). This enables the two VPNs shown in Figure 2 to be swapped over so that VPN 19 replaces VPN 14, making test equipment 15-18 operative in the network as real equipment. It should be noted that the numbers of items of equipment and the number of VLANs are arbitrary. Although Figure 2 shows two VPNs, one for real equipment and one for test equipment, this is not essential: for example there may be no real equipment already in place at the site, or no need for isolating real from test equipment, in which case there would be a single VPN comprised of the test equipment.

As explained above, Master and Standby Lanes are provided to allow switchover to happen smoothly when configuration is changed and validated. That is, one of the Standby lanes handles the change in the router configuration performed by the administrator (see below), validates, and applies to itself. Then it takes over as the Master lane and performs syncing with other lanes.

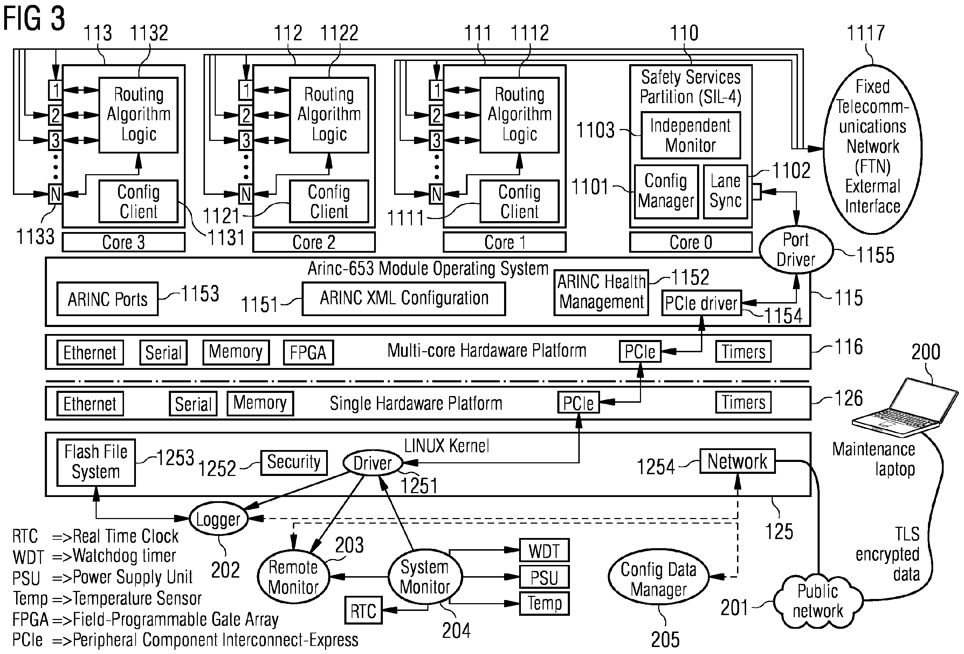

Figure 3 is a schematic block diagram showing a combination of hardware and software modules, focussing on one lane. Each lane has its own Main Processor (the elements of which are above the chain line across Figure 3, labelled 110-13 and 115) and a support processor (the elements 125 and 126 below the chain line). Figure 3 also shows peripheral items including a logger 202, remote monitor 203, config data manager 205, public network 201 and maintenance laptop 200. These units, which are conventional in themselves and whose functions will be familiar to those of skill in the art, are not part of the SIL4 Capable Router but have to be connected to the router for configuration purposes and so forth as explained below.

Connections of such external equipment, as well as the connection of the Gateway to the SIL4 Capable Router in Figure 2, can be made via the Public Network 201, for example a Wi-Fi or Ethernet network

Thus, the hardware resources available to each Lane comprise two Microprocessors: a Main processor and a Support processor. The Main microprocessor has 4 cores 110, 111, 112 and 113 in this example, assuming a quad-core processor is used. Each core can handle one VPN shown in Figure 2. Thus, each Lane can provide as many VPNs as the number of cores in the Main microprocessor (less one for housekeeping).

The Main processor is responsible for safety critical functions, up to SIL4, and uses Arinc-653 Interface Standard OS, indicated by 115 in the Figure, in order to partition applications with different SILs. Arinc-653 is a software specification (originally developed for the aerospace industry) for partitioning applications in real-time operating systems. Each application is given its own partition in memory and its own dedicated time slot, allowing different applications to be combined in the same computing platform whilst containing faults within each application. Use of an Arinc-653 Interface Standard OS therefore contributes to making the router SIL-4 capable. As shown in Figure 3, the Arinc-653 OS 115 has various sub-modules including an XML configuration module 1151, health management module 1152, ARIC ports 1153 and PCIe driver 1154.

The Support processor can be a single-core processor and employs a general purpose operating system, such as Linux, as indicated at 125 in Figure 3. It provides functionality like latest secure networking solutions, flexibility and performance advantages. Functional modules of the Linux kernel include a driver 1251, security software 1252, a flash file system 1253 and network interface 1254 linking the Support processor to the Public network 201.

The two processors are linked via a multi-core hardware platform 116 in the Main processor and a single hardware platform 126 in the Support processor, each of these comprising known functional units and interfaces including Ethernet, Serial and PCIe (PCI express) as indicated in the Figure.

In the Main processor, one Core 110 (also labelled Core 0) is responsible for bookkeeping activity, and each of the remaining Cores 111, 112 and 113 are responsible for managing an individual private network (see Figure 2) and routing of the data within that private network. Since each private network is handled by a separate Core, this helps to eliminate the cross-communication between individual private networks. This provides a safe isolation within the network equipment and contributes to the SIL4 capability of the router 100. As already mentioned, multiple VPNs are not essential. If isolation is not required between the network equipment (in other words, if both test equipment and real equipment can be handled by one lane), then a single Core will perform the normal routing operation and rest of the Cores will remain idle. This would correspond to removing the dashed divider line in Fig. 2.

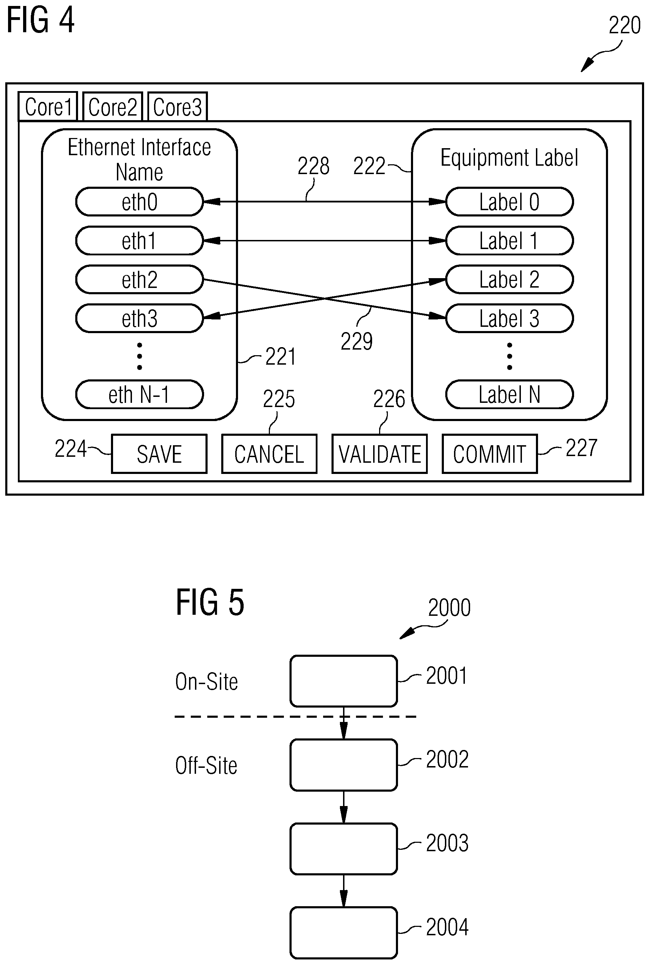

The manner in which items of test equipment or real equipment are assigned to VPNs (and thus to Cores) will now be explained with respect to Figure 4. Figure 4 shows a screen display 220 as part of a user interface presented to an administrator (referred to below simply as "admin"), i.e. a human user of the maintenance laptop 200 who is responsible for commissioning the test equipment. As shown in the Figure, the display includes tabbed windows for each of Core 1, Core 2 and Core 3 (111 - 113 in Figure 3). For each Core (and thus, for each VPN 14 and 19 of Figure 2), a left-hand panel 221 represents the N available Ethernet interfaces of that Core, eth0 to eth(N-1). The right-hand panel 222 is a list of equipment to be connected, each item of equipment having a name Label 0, Label 1 and so forth. Although N items of equipment are listed, there may be less than N items in practice. To assign a connection (or mapping) between equipment and interfaces, the admin drags an arrow between the two panels. The arrows may be bidirectional such as the arrow labelled 228 joining eth0 to LabelO, or unidirectional as illustrated by arrow 229 joining eth2 to Label 3. This reflects the desired modes of communication (duplex, TX-blocked or RX-blocked as noted below), which are confirmed as part of a validation process explained below.

The above process, called Network Equipment Mapping, allows mapping of the Ethernet interfaces to the network equipment in the live railway network, and is reconfigurable depending upon the functional need by the admin. The User Interface provides the following facilities shown by the buttons 224 to 227 displayed at the bottom of the user interface 220:-
Save 224 - Admin can save the intermediate changes to the mapping configuration data locally
Cancel 225 - Admin can cancel the changes performed if needed
Validate 226 - Validates the mapping configuration data (see below)
Commit 227 - Cross-compiled binary image of the mapping configuration data is sent to the Support processor of one of the Standby lanes, which in turn passes the binary image to Core 0 of the Main processor via PCIe link 1154 and 1155. A configuration client 1111, 1121 or 1131 in the appropriate Core is responsive to the Configuration Manager 1101 of Core0 to implement the changes.

In addition, the admin can switch between Cores (and thus, between the VPNs 14 and 19) by selecting the tabs at the top of the display. The mapping may be made separately for each Core, but a copy facility could be provided to copy settings for one Core over to another Core. It will be noted from the above that there is no need for the admin to be concerned with which Lanes are operational in the SIL4 Capable Router. He or she need only consider the mapping of Ethernet interfaces to equipment, after which the router will switch the Lanes to effect the mapping once the Commit button is pressed.

As will be apparent from the above, data is handled by the router in the form of Ethernet packets. As part of the above mentioned validation, to protect packets from erroneous assignment to the wrong destination Ethernet address, the present embodiment provides Routing Algorithm Logic, using a Routing Protection Scheme to ensure that packet data is correctly routed from source network equipment to the destination network equipment. This includes checking if any real or test equipment is not to receive data (RX-blocked) or not allowed to transmit data (TX-blocked). The Routing Algorithm Logic is present in each core 111, 112 and 133 of Figure 3 as indicated at 1112, 1122 and 1132.

The Routing Protection Scheme defines a Lane ID, Core ID and Routing ID for routing the data between the network equipment. The Routing ID is formed by Exclusively ORing Lane ID and Core ID and is managed as a mask of bits. The Routing ID is assigned to each Core of the Main processor and added to the Ethernet header of each packet so as to identify the correct routing, and is for internal use within the router 100.

The Lane ID forms part of the Routing ID so that data cannot be incorrectly handled by Routing Algorithm Logic of another lane via the inter-lane links. The Core ID forms part of the Routing ID so that data cannot be incorrectly handled by Routing Algorithm Logic of another core.

For example, Routing ID of Core1 in Lane 1 is set to 0x11 as indicated in Table 1. The Routing ID is an 8-bit unique identifier assigned to each core of the Main processor and is initialised at the system start-up by default. The Routing ID can be reconfigurable by the admin with sufficient rights while router is operational in the live Railway network.

The Routing Algorithm Logic uses Routing ID to validate the source and destination address of the network equipment for the data exchange via the SIL4 Capable Router. It is assumed that each of the source and destination is an item of real equipment or test equipment attached to the SIL4 Capable Router. In this context, to validate the destination address means to check if the Routing ID is an ID corresponding to a Core and Lane of the SIL4 Capable Router. Likewise, validating the source address is done using a Routing ID derived from the relevant Lane ID and Core ID of the router 100.

If the validation fails, the admin is informed of this fact and then Routing Algorithm Logic ignores the data. The different source and destination equipment can be identified by different label names and its mapping to different Ethernet interfaces as shown in the following Table 1, which corresponds to the GUI representation shown in Figure 4. That is, based on the VPN to which an item of equipment belongs (Figure 2), the corresponding Lane ID is set for that equipment as the source Lane ID. In Table 1, x indicates hexadecimal representation and dots indicate arbitrary values. To save space, the values are not filled in for Cores 2 and 3 (0x02 and 0x04), but these would correspond to the values for Core 1 (0x01). As already mentioned, Core 0 is reserved for housekeeping purposes and therefore does not have a routing configuration.

**Table 1 - Routing Algorithm Logic Configuration Table**

| **Lane ID (8 Bits)** | **Core ID (8 Bits)** | **Routing ID = (Lane ID XOR Core ID)** | **Equipment Label (32 chars)** | **Ethernet Interface Name** | **IP Address** | **Direction (None = 0, RX-Blocked = 1, TX-Blocked = 2, ALL-Blocked = 3)** |
|---|---|---|---|---|---|---|
| **0x10** | **0x00** | **0x10** | NA | NA | NA | NA |
| | **0x01** | **0x11** | Label0 | eth0 | ... | 0 |
| | | | Label1 | eth1 | ... | 1 |
| | | | Label3 | eth2 | ... | 2 |
| | | | ... | ... | ... | ... |
| | | | ... | ethN-1 | ... | 0 |
| | **0x02** | **0x12** | ... | eth0 | ... | 0 |
| | | | ... | eth1 | ... | 0 |
| | | | ... | ... | _{...} | ... |
| | | | ... | ethN-1 | ... | 0 |
| | **0x04** | **0x14** | ... | eth0 | ... | 0 |
| | | | ... | eth1 | ... | 0 |
| | | | ... | ... | ... | ... |
| | | | ... | ethN-1 | _{...} | 0 |
| **0x20** | ... | ... | ... | ... | ... | ... |
| **0x40** | ... | ... | ... | ... | ... | ... |

A further aspect of data exchange among items of equipment attached to the SIL4 Capable Router, is the permitted directions of communication, as indicated in Figure 4 by the unidirectional and bidirectional arrows. This is referred to as Directional Flow Control and is indicated by a field added to the payload of each Ethernet packet, which takes a value as shown in Table 2 below:

**Table 2 - Direction Flow Control**

| **Value** | **Direction** | **Note** |
|---|---|---|
| 0 | None | This is assigned by default, enables the equipment to communicate in Duplex mode. |
| 1 | RX-Blocked | Enables the equipment to block from receiving data. |
| 2 | TX-Blocked | Enables the equipment to block from transmitting data. |
| 3 | ALL-Blocked | Blocks the equipment from both transmitting and receiving data. |

It should be noted that this field (and the Routing Algorithm Logic in general) is only used for the data exchange between items of equipment connected to the SIL4 Capable Router, and not to other equipment.

Having described the functional parts of the router, a method of commissioning test equipment by use of an embodiment of the present invention will now be outlined with respect to Figure 5 showing a simplified operation flow 2000.

Step 2001, as is in the conventional method of Figure 1, is to install the test equipment on site and perform a visual check that the units are powered, communication cables plugged in and so on. In contrast to the conventional method, however, the subsequent steps are carried out remotely, as indicated by the dashed line and the label "Off-Site".

In step 2002, the admin (administrator) logs in to the Maintenance computer 200 that performs a secure connection to the SIL4 Capable Router 100 remotely. To be specific, the connection is from computer 200 over Public network 201 to the network interface 1254 of the Support processor. The Maintenance computer 200 can only be operated by administrative personnel with sufficient rights, and is encrypted and also public key infrastructure (PKI) protected. Once the Maintenance computer 200 establishes the communication with router 100 successfully, software in the Maintenance computer reads the existing configuration data and the configuration screen depicted in Figure 4 is presented, to display the existing equipment mapping to the admin.

In step 2003, the admin revises or updates the mapping of the Ethernet interfaces to the network equipment as described above and finally selects "Commit" (button 227) to effect the changes. This is achieved through communication between the maintenance computer 200 and Support Processor of router 100 to Core 0 of the Main Processor via their PCIe link, and using a Lane Synchronization module 1102.

In step 2004, in response the Config Manager 1101 in Core 0 of the Main processor validates and then commits the changes. Then that Standby lane restarts itself, overtakes the existing Master lane and performs synchronization operation.

The test equipment is now ready for use. The SIL4 Capable Router can be disconnected and taken to another test site.

As will be apparent, this solution simplifies testing and commissioning of new network equipment simpler before commissioning. Advantages include the following:
(a) Automation of testing method used before commissioning by providing guaranteed logical separation of the test and real network equipment in live railway environment. The logical separation is ensured by maintaining separate VPNs by each Core, and thus doesn't disrupt the existing operation of the Railway network.
(b) The router itself guarantees the logical separation of test equipment from other kinds of equipment, and doesn't involve any unplugging of the cables for the testing and then plugging it back.
(c) The testing using router is more secure and cannot be hacked because logical separation of the test and real network equipment in live railway environment is performed within the router itself and risk of human error is extremely low.
(d) The router and testing method can be used with any type of network equipment from other providers as well in live railway system because they do not depend on externally connected network equipment data.
(e) The proposed method and router drastically reduce the cost, saves time and requires fewer resources for testing of test equipment during commissioning.
(f) The test equipment can be tested remotely sitting at one place with less dependency on other resources.
(g) The present invention provides safe testing environment since not much physical presence is required at the location of site testing.

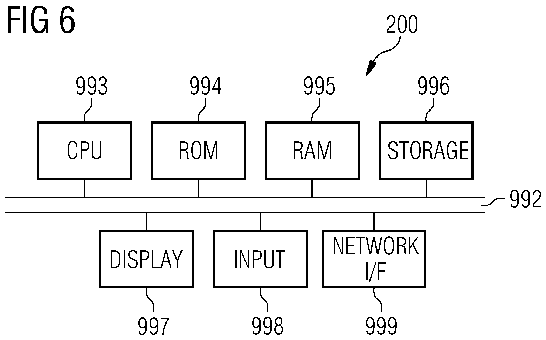

Figure 6 is a block diagram of a computing device which may be used as a maintenance computer 200 as referred to above in order to implement a method of an embodiment. The computing device 200 comprises a computer processing unit (CPU) 993, memory, such as Random Access Memory (RAM) 995, and storage, such as a hard disk, 996. The computing device also includes a network adapter 999 for communication with other such computing devices of embodiments. For example, an embodiment may be composed of a network of such computing devices. Optionally, the computing device also includes Read Only Memory 994, one or more input mechanisms such as keyboard and mouse 998, and a display unit 997 such as one or more monitors. The components are connectable to one another via a bus 992. The CPU 993 is configured to control the computing device and execute processing operations, such as presenting the GUI depicted in Figure 4. The RAM 995 stores data being read and written by the CPU 993. The storage unit 996 may be, for example, a non-volatile storage unit, and is configured to store data.

The CPU 993 may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The storage unit 996 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations.

Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The display unit 997 displays a representation of data stored by the computing device and displays a cursor and dialog boxes and screens enabling interaction between a admin and the programs and data stored on the computing device, including but not limited to the mapping process of Figure 4. The input mechanisms 998 enable a admin to input data and instructions to the computing device.

The network adapter (network I/F) 999 is connected to the public network (e.g. FDN/FDNx), and is connectable to the router 100 and to other such computing devices via the network. The network adapter 999 controls data input/output from/to other apparatus via the network. Other peripheral devices such as microphone, speakers, printer, power supply unit, fan, case, scanner, trackball etc may be included in the computing device 200.

To summarise, embodiments of the present invention facilitate commissioning of new network equipment in the live railway without interference to the working of the live railway environment. In embodiments, this is done using a router which maintains separate VPNs in different processor cores, including one VPN for live equipment and one for test equipment. A user can remotely configure the VPN of the test equipment and, once the configuration has been validated, Master and Standby Lanes within the router are switched over to effect the configuration. This provides the means of testing the installed new railway network equipment within a live railway environment through the use of a router, whilst maintaining the required safety separation of the test and live equipment. This invention adds the flexibility of testing from a remote location with fewer resources. Further, by making the router SIL4 Capable the required safety level can be assured for critical applications.

The invention can also be used for routine testing of already commissioned network equipment if required.

Various modifications are possible within the scope of the invention.

In Figure 3, a Quad-core processor is used as the Main processor for illustration purposes. As will be understood by a person of skill in the art, a different number of cores may be used.

With respect to Figure 3, it is described that a Support processor is provided for each Lane. However, this is not essential and a common support processor could serve multiple Lanes.

It will be appreciated by those skilled in the art that although the invention has been described with reference to one or more exemplary examples, it is not limited to the disclosed examples and that alternative examples could be constructed without departing from the scope of the invention as defined by the appended claims.

## Claims

1. A router (100) for use in commissioning new equipment within a network, the network comprising live equipment, the router having:
a first processing element (110 - 114) adapted to manage a first Virtual Private Network, VPN (14), for live equipment (10-13) which is already operational;
a second processing element (110 -114)adapted to manage a second VPN (19), separate from said first VPN, for new equipment (15-18) to be commissioned;
wherein the network is a rail network and the router further comprises Master and Standby lanes each having respective 15 said first and second processing elements;
the router (100) further comprising a configuration manager (1101 - 1103) operable to switch the Master lane to the Standby lane and vice-versa;
each processing element including a plurality of network interfaces (1133) and a configuration client (111, 1121, 1131), responsive to the configuration manager, adapted to allow remote configuration of each VPN (14, 19) by being configured with a mapping defining connections of equipment to any of the plurality of network interfaces (1133 ), and further including routing algorithm logic allowing testing of said mapping;
and wherein the configuration manager (1101 - 1103) is arranged to receive said mapping, validate the same using the routing algorithm logic of the processing elements and once the mapping is validated, to effect said lane switch thereby bringing the new equipment (15-18) into operation .

2. The router according to claim 1 wherein the router (100), and each lane of the router, further comprises a support processing element (110) for interfacing with at least one remote computing device, which includes said configuration manager (1101 - 1103) and receives said remote configuration.

3. The router according to claim 1 wherein the items of equipment (10-13, 15-18) communicate via exchange of data packets and the routing algorithm logic employs at least one of a routing ID for internal use of the router added to a packet header, and a direction flow control field in a packet payload.

4. The router according to claim 3, wherein the routing ID is derived from an identifier of a processing element of said first and second processing elements (110 - 113) and an identifier of a lane of said Master and Standby lanes

5. The router according to claim 3 or 4 wherein the direction control flow field is determined by setting allowed directions of communication of equipment in said mapping.

6. The router according to any preceding claim wherein each first (110 - 113) and second processing element (125, 126) is controlled by a safety-critical real-time operating system.

7. The router according to any preceding claim wherein each first(110 - 113) and second (125, 126) processing element is a respective core of a multi-core processor.

8. The router according to any preceding claim wherein the router is SIL-4 compliant.

9. A rail network comprising:
the router (100) according to any of claims 1 to 8;
at least one item of live equipment (10 - 13) in the first VPN (14);
at least one item of new equipment (15 - 18) in the second VPN (19); and
a management device connected to the router for configuring each VPN.

10. The network according to 9 claim further comprising a gateway (20) connected to the router (100), wherein other equipment existing in the network communicates with the live equipment (10 - 13) and new equipment (15 - 18) through the router (100) and gateway (20).

11. A method of commissioning test equipment in a rail network, wherein the method comprises:
connecting live equipment (10 - 13)to the first VPN (14) of the router (100) according to any of claims 1 to 8;
connecting new equipment (15 - 18) to the second VPN (19) of the router (100) according to any of claims 1 to 8;
remotely configuring the router with a mapping for the new equipment; and
validating the mapping by the configuration manager.

12. Software in the form of a set of computer-readable instructions stored on a computer readable medium which, when executed by one or more processing elements of one or more computing devices, performs the method of claim 11.

## Patentansprüche

1. Router (100) zur Verwendung bei der Inbetriebnahme neuer Einrichtungen in einem Netz, wobei das Netz aktive Einrichtungen umfasst und der Router Folgendes aufweist:
ein erstes Verarbeitungselement (110 bis 114), das angepasst ist, ein erstes virtuelles privates Netz, VPN (14), für aktive Einrichtungen, die bereits in Betrieb sind, zu verwalten,
ein zweites Verarbeitungselement (110 bis 114), das angepasst ist, ein zweites VPN (19), das von dem ersten VPN getrennt ist, für in Betrieb zu nehmende neue Einrichtungen (15 bis 18) zu verwalten,
wobei
das Netz ein Schienennetz ist und der Router ferner Master- und Standby-Lanes umfasst, die jeweils die ersten und zweiten Verarbeitungselement aufweisen,
der Router (100) ferner einen Konfigurationsmanager (1101 bis 1103) umfasst, der betreibbar ist, die Master-Lane auf die Standby-Lane zu schalten und umgekehrt,
jedes Verarbeitungselement eine Mehrzahl von Netzschnittstellen (1133) und einen Konfigurationsclient (111, 1121, 1131) einschließt, der auf den Konfigurationsmanager anspricht, der angepasst ist, Fernkonfiguration jedes VPN (14, 19) zu erlauben, indem sie mit einer Zuordnung konfiguriert werden, die Verbindungen der Einrichtungen mit irgendeiner der Mehrzahl von Netzschnittstellen (1133) definiert, und ferner eine Routing-Algorithmuslogik einschließt, die das Testen der Zuordnung erlaubt, und wobei der Konfigurationsmanager (1101 bis 1103) dazu ausgebildet ist, die Zuordnung zu empfangen, dieselbe unter Verwendung der Routing-Algorithmuslogik von Verarbeitungselementen zu validieren und, sobald die Zuordnung validiert ist, das Schalten der Lane zu bewirken und dadurch die neuen Einrichtungen (15 bis 18) in Betrieb zu bringen.

2. Router nach Anspruch 1, wobei der Router (100) und jede Lane des Routers ferner ein unterstützendes Verarbeitungselement (110) zur Schnittstellenbildung mit mindestens einer entfernten Rechenvorrichtung umfasst, die den Konfigurationsmanager (1101 bis 1103) einschließt und die Fernkonfiguration empfängt.

3. Router nach Anspruch 1, wobei die Einrichtungsgegenstände (10 bis 13, 15 bis 18) durch Austausch von Datenpaketen kommunizieren und die Routing-Algorithmuslogik mindestens eine Routing-ID für die interne Verwendung des zu einem Paketkopf hinzugefügten Routers und ein Richtungsflusssteuerungsfeld in einer Paketnutzlast verwendet.

4. Router nach Anspruch 3, wobei die Routing-ID von einem Identifizierer eines Verarbeitungselements der ersten und zweiten Verarbeitungselemente (110 bis 113) und einem Identifizierer einer Lane der Master- und Standby-Lanes abgeleitet ist.

5. Router nach Anspruch 3 oder 4, wobei das Richtungsflusssteuerungsfeld durch Einstellen erlaubter Kommunikationsrichtungen der Einrichtungen in der Zuordnung bestimmt wird.

6. Router nach einem der vorhergehenden Ansprüche, wobei jedes erste (110 bis 113) und zweite Verarbeitungselement (125, 126) durch ein sicherheitskritisches Echtzeitbetriebssystem gesteuert wird.

7. Router nach einem der vorhergehenden Ansprüche, wobei jedes erste (110 bis 113) und zweite (125, 126) Verarbeitungselement ein jeweiliger Kern eines Multi-Core-Prozessors ist.

8. Router nach einem der vorhergehenden Ansprüche, wobei der Router SIL-4-konform ist.

9. Schienennetz, das Folgendes umfasst:
den Router (100) nach einem der Ansprüche 1 bis 8,
mindestens einen Gegenstand der aktiven Einrichtungen (10 bis 13) in dem ersten VPN (14),
mindestens einen Gegenstand der neuen Einrichtungen (15 bis 18) in dem zweiten VPN (19),
eine Verwaltungsvorrichtung, die mit dem Router zum Konfigurieren jedes VPN verbunden ist.

10. Netz nach Anspruch 9, das ferner ein Gateway (20) umfasst, das mit dem Router (100) verbunden ist, wobei eine andere in dem Netz vorhandene Einrichtung durch den Router (100) und das Gateway (20) mit den aktiven Einrichtungen (10 bis 13) und den neuen Einrichtungen (15 bis 18) kommuniziert.

11. Verfahren zur Inbetriebnahme von Testeinrichtungen in einem Schienennetz, wobei das Verfahren Folgendes umfasst:
Verbinden der aktiven Einrichtungen (10 bis 13) mit dem ersten VPN (14) des Routers (100) nach einem der Ansprüche 1 bis 8,
Verbinden der neuen Einrichtungen (15 bis 18) mit dem zweiten VPN (19) des Routers (100) nach einem der Ansprüche 1 bis 8,
Fernkonfigurieren des Routers mit einer Zuordnung für die neuen Einrichtungen und
Validieren der Zuordnung durch den Konfigurationsmanager.

12. Software in der Form eines Satzes auf einem computerlesbaren Medium gespeicherter computerlesbarer Anweisungen, die, wenn sie von der ein oder mehr Rechenvorrichtungen ausgeführt werden, das Verfahren nach Anspruch 11 ausführen.

## Revendications

1. Routeur (100) à utiliser pendant la mise en service d'un nouvel équipement dans un réseau, le réseau comprenant de l'équipement sous tension, le routeur comportant :
un premier élément de traitement (110-114) adapté en vue de gérer un premier réseau privé virtuel VPN (14) pour l'équipement sous tension (10-13) qui est déjà opérationnel ;
un deuxième élément de traitement (110-114) adapté en vue de gérer un deuxième VPN (19), distinct dudit premier VPN, pour le nouvel équipement (15-18) à mettre en service,
étant entendu que le réseau est un réseau ferroviaire et que le routeur comprend par ailleurs des voies principale et de réserve, chacune comportant desdits premier et deuxième éléments de traitement respectifs ;
le routeur (100) comprenant par ailleurs un gestionnaire de configuration (1101-1103) utilisable pour basculer de la voie principale vers la voie de réserve et vice versa ;
chaque élément de traitement comprenant une pluralité d'interfaces réseau (1133) et un client de configuration (111, 1121, 1131), réagissant au gestionnaire de configuration, adapté en vue de permettre la configuration à distance de chaque VPN (14, 19) moyennant sa configuration avec un mappage définissant des connexions de l'équipement à une quelconque interface de la pluralité d'interfaces réseau (1133), et comprenant par ailleurs une logique algorithmique de routage permettant de tester ledit mappage, et
étant entendu que le gestionnaire de configuration (1101-1103) est agencé en vue de recevoir ledit mappage, de le valider en utilisant la logique algorithmique de routage des éléments de traitement et, une fois que le mappage a été validé, d'effectuer ledit basculement de voie, ce qui met le nouvel équipement (15-18) en service.

2. Routeur selon la revendication 1 étant entendu que le routeur (100), et chaque voie du routeur, comprend par ailleurs un élément de traitement (110) de support servant d'interface avec au moins un dispositif de calcul distant qui comprend ledit gestionnaire de configuration (1101-1103) et reçoit ladite configuration à distance.

3. Routeur selon la revendication 1 étant entendu que les articles de l'équipement (10-13, 15-18) communiquent par échange de paquets de données et que la logique algorithmique de routage emploie au moins soit un ID de routage à usage interne dans le routeur ajouté à un en-tête de paquet, soit un champ de commande de flux directionnel dans les données utiles d'un paquet.

4. Routeur selon la revendication 3, étant entendu que l'ID de routage est tiré d'un identifiant d'un élément de traitement parmi lesdits premier et deuxième éléments de traitement (110-113) et d'un identifiant d'une voie parmi lesdites voies principale et de réserve.

5. Routeur selon la revendication 3 ou 4 étant entendu que l'on détermine le champ de commande de flux directionnel en fixant les sens permis de communication de l'équipement dans ledit mappage.

6. Routeur selon l'une quelconque des revendications précédentes étant entendu que chaque premier (110-113) et deuxième (125, 126) élément de traitement est commandé par un système d'exploitation en temps réel essentiel à la sécurité.

7. Routeur selon l'une quelconque des revendications précédentes étant entendu que chaque premier (110-113) et deuxième (125, 126) élément de traitement est un cœur respectif d'un processeur multicœur.

8. Routeur selon l'une quelconque des revendications précédentes étant entendu que le routeur est conforme à un niveau de sécurité SIL-4.

9. Réseau ferroviaire comprenant :
le routeur (100) selon l'une quelconque des revendications 1 à 8 ;
au moins un article d'équipement sous tension (10-13) dans le premier VPN (14) ;
au moins un article de nouvel équipement (15-18) dans le deuxième VPN (19), et
un dispositif de gestion relié au routeur en vue de configurer chaque VPN.

10. Réseau selon la revendication 9 comprenant par ailleurs une passerelle (20) reliée au routeur (100), étant entendu que d'autres équipements existant dans le réseau communiquent avec l'équipement sous tension (10-13) et le nouvel équipement (15-18) par l'intermédiaire du routeur (100) et de la passerelle (20).

11. Procédé de mise en service d'équipement d'essai dans un réseau ferroviaire, étant entendu que le procédé consiste :
à relier l'équipement sous tension (10-13) au premier VPN (14) du routeur (100) selon l'une quelconque des revendications 1 à 8 ;
à relier le nouvel équipement (15-18) au deuxième VPN (19) du routeur (100) selon l'une quelconque des revendications 1 à 8 ;
à configurer à distance le routeur avec un mappage destiné au nouvel équipement, et
à faire valider le mappage par le gestionnaire de configuration.

12. Logiciel sous la forme d'un jeu d'instructions lisibles par ordinateur, conservées sur un support lisible par ordinateur, qui, quand elles sont exécutées par un ou plusieurs éléments de traitement d'un ou de plusieurs dispositifs de calcul, exécutent le procédé selon la revendication 11.
